# EUROPEAN PATENT APPLICATION

(11) **EP 1 545 034 A2**
(43) Date of publication of application: **22.06.2005**
(21) Application number: 04027264.3
(22) Date of filing: 17.11.2004
(51) Int. Cl.: H04J 14/02, H04N 7/22

(54) **Digital video overlay for passive optical networks**

(30) Priority: 20.12.2003 US 742669
(71) Applicant: ALCATEL, 75008 Paris (FR)
(72) Inventor: Ploumen, Franciscus M., Windsor, CA 95492 (US)
(74) Representative: Dreiss, Fuhlendorf, Steimle & Becker

(57) **Abstract**

A passive optical network (PON) is described herein that is capable of using a wavelength division multiplexing (WDM) digital video overlay to deliver a digital video signal on a 1550nm center-wavelength from a video head-end to an end-user. The PON is also capable of transmitting voice and data on a 1480-1500nm band to the end-user and further capable of receiving voice and data on a 1260-1360nm band from the end-user. The digital video signal can be generated for example from an analog broadcasted television signal, a video-on-demand video signal or a high definition television signal. A set-top box used by the end-user which interfaces with the passive optical network is also described herein.

## Description

### BACKGROUND OF THE INVENTION

### Field of the Invention

The present invention relates in general to a passive optical network that is capable of delivering video, voice and data to end-users.

### Description of Related Art

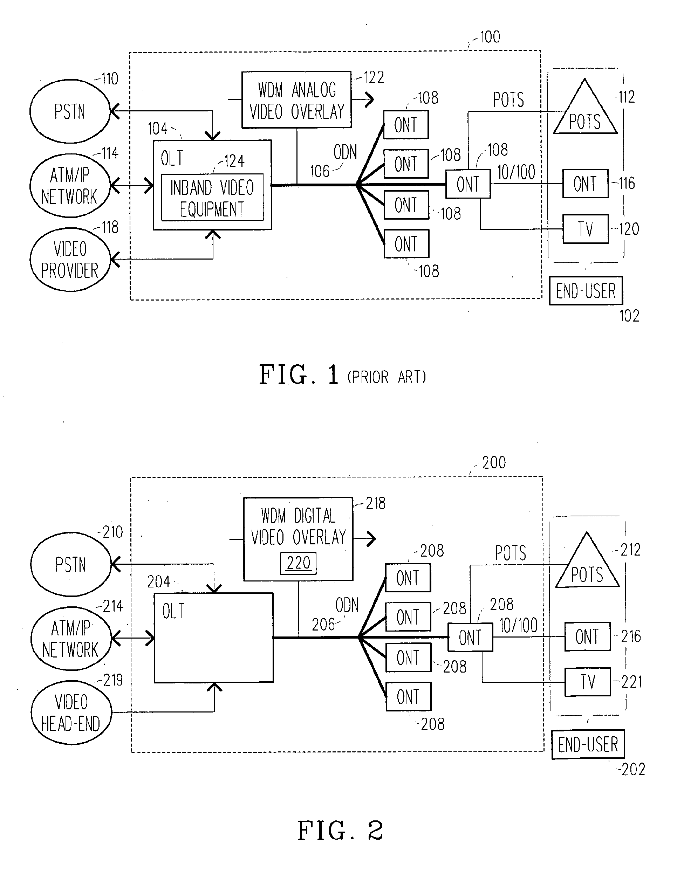

Referring to FIGURE 1, there is a block diagram that shows the basic components of a traditional PON 100 that is capable of delivering video, voice and data to an end-user 102 (one shown). The PON 100 is made from well known components which include an optical line termination module (OLT) 104, an optical distribution network (ODN) 106 and multiple optical network termination modules (ONTs) 108 (five shown). As shown, the OLT 104 interfaces with a public switched telephone network (PSTN) 110 which enables voice to be delivered to the end-user 102 via a plain old telephone service (POTS) device 112 (e.g., telephone 112). In addition, the OLT 104 interfaces with an asynchronous transfer mode/internet protocol (ATM/IP) network 114 which enables data to be delivered to the end-user 102 via a personal computer (PC) 116. Typically, the voice and data are transmitted to the end-user 102 on a 1480-1500nm band (e.g., 1490nm center-wavelength) and received from the end-user 102 on a 1260-1360nm band (e.g., 1310nm center-wavelength). Moreover, the OLT 104 interfaces with a video provider 118 which enables video to be delivered to the end-user 102 via a television 120. A brief description is provided below that describes two known ways that the PON network 100 can be configured to deliver video to the end-user 102.

One known way of configuring the traditional PON 100 so it can deliver video in addition to voice and data to end-users 102 is to use a wavelength division multiplexing (WDM) 1550nm analog video overlay 122 (e.g., see the ITU-T G983.1 to 8 specification). There are several drawbacks associated with this particular traditional PON 100 including for example: (1) the WDM analog video overlay 122 is "analog"; (2) the WDM analog video overlay 122 does not support evolutions towards video-on-demand or high definition television (HDTV) very well; and (3) the WDM analog video overlay 122 is not compatible with inband video delivery systems that use for example an xDSL infrastructure. Another disadvantage is the cost of the WDM analog video overlay 122 where high power optics are required at the OLT 104 to feed the analog video signal to the ONTs 108. The high power optics and their supporting amplifiers are expensive because they have high linearity requirements over a broad frequency range.

A second known way of configuring the traditional PON 100 so it can deliver video in addition to voice and data to end-users 102 is to integrate inband video streaming equipment 124 into the PON 100. The main drawbacks associated with this particular traditional PON 100 is that the inband video streaming equipment 124 needs a complicated multicast protocol to avoid duplication of broadcast streams. In addition, the inband video streaming equipment 124 needs an enormous bandwidth to distribute the video signals. The complicated multicast protocol and the enormous bandwidth requirements have an adverse impact on the development resources and potential cost of the inband video streaming equipment 124. As such, there is a need for a PON network that addresses and solves the aforementioned drawbacks associated with delivering video to an end-user using the traditional PONs. These needs and other needs are addressed by the PON, set-top box and methods of the present invention.

### BRIEF DESCRIPTION OF THE INVENTION

The present invention includes a PON capable of using a WDM 1550nm digital video overlay to deliver a digital video signal (e.g., analog broadcasted signal) from a video head-end to an end-user. The PON is also capable of transmitting voice and data on a 1480-1500nm band to the end-user and further capable of receiving voice and data on a 1260-1360nm band from the end-user. The present invention also includes a set-top box and several methods associated with using the PON.

### BRIEF DESCRIPTION OF THE DRAWINGS

A more complete understanding of the present invention may be obtained by reference to the following detailed description when taken in conjunction with the accompanying drawings wherein:
- FIGURE 1 (PRIOR ART): is a block diagram that shows the basic components of a traditional PON that is capable of delivering video, voice and data to an end-user;
- FIGURE 2: is a block diagram that shows an enhanced PON that is capable of delivering video, voice and data to an end-user in accordance with the present invention;
- FIGURE 3A: is a block diagram that shows the basic components of the PON shown in FIGURE 2 that has been enhanced in accordance with a first embodiment of the present invention;
- FIGURE 3B: is a flowchart of the basic steps of a preferred method for using the PON shown in FIGURE 3A to deliver video from a video head-end to an end-user in accordance with the first embodiment of the present invention;
- FIGURE 3C: is a block diagram that shows an exemplary protocol stack that can be used to implement the PON shown in FIGURE 3A in accordance with the first embodiment of the present invention;
- FIGURE 3D: is a block diagram that illustrates the basic components of an ONT that is located within the PON shown in FIGURE 3A in accordance with the first embodiment of the present invention;
- FIGURE 4A: is a block diagram that shows the basic components of the PON shown in FIGURE 2 that has been enhanced in accordance with a second embodiment of the present invention;
- FIGURE 4B: is a flowchart of the basic steps of a preferred method for using the PON shown in FIGURE 4A to deliver video from a video head-end to an end-user in accordance with the second embodiment of the present invention; and
- FIGURE 4C: is a block diagram that shows an exemplary protocol stack that can be used to implement the PON shown in FIGURE 4A in accordance with the second embodiment of the present invention.

### DETAILED DESCRIPTION OF THE DRAWINGS

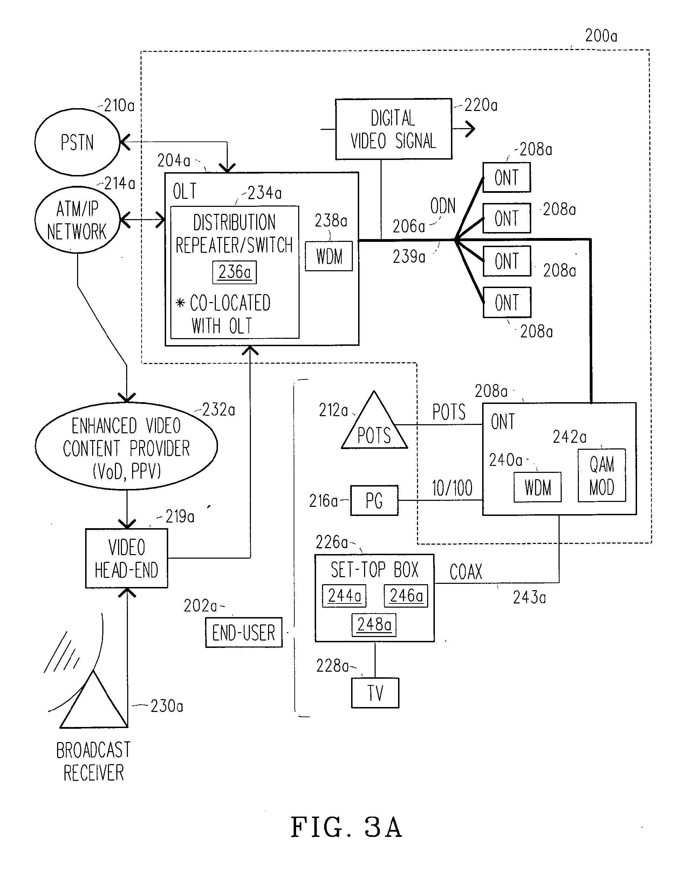

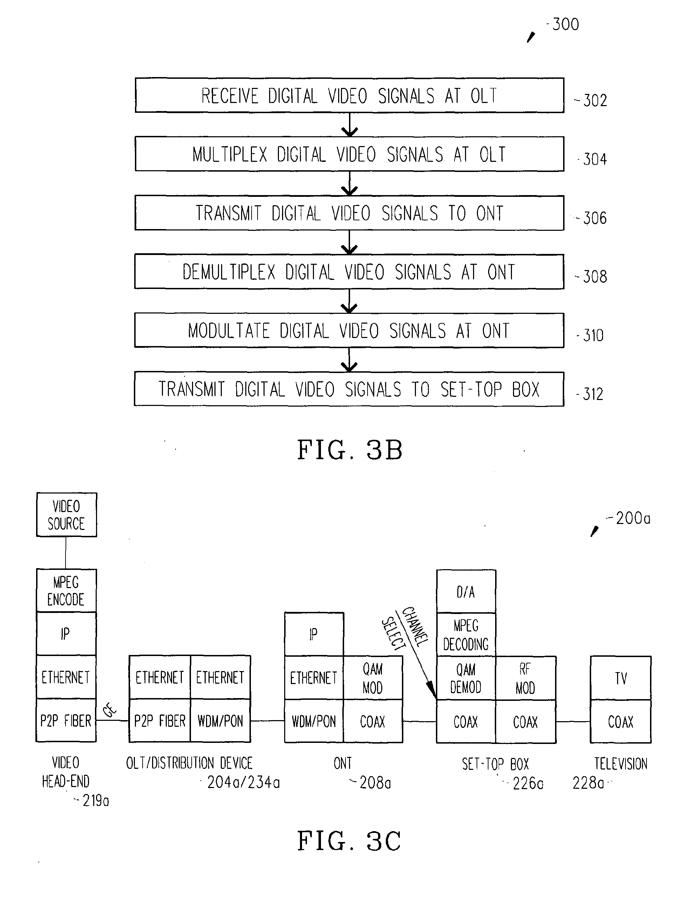

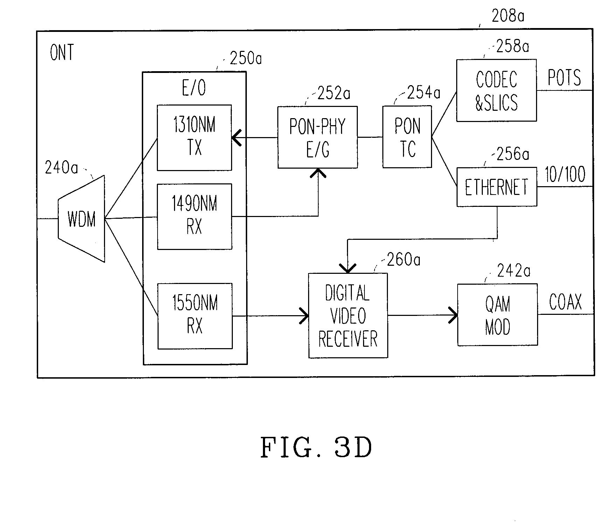

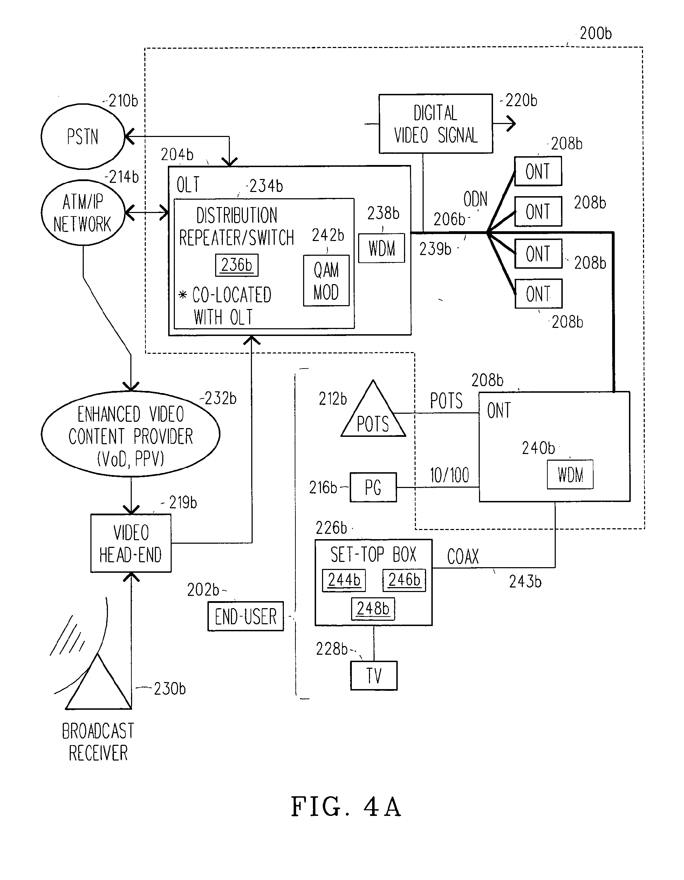

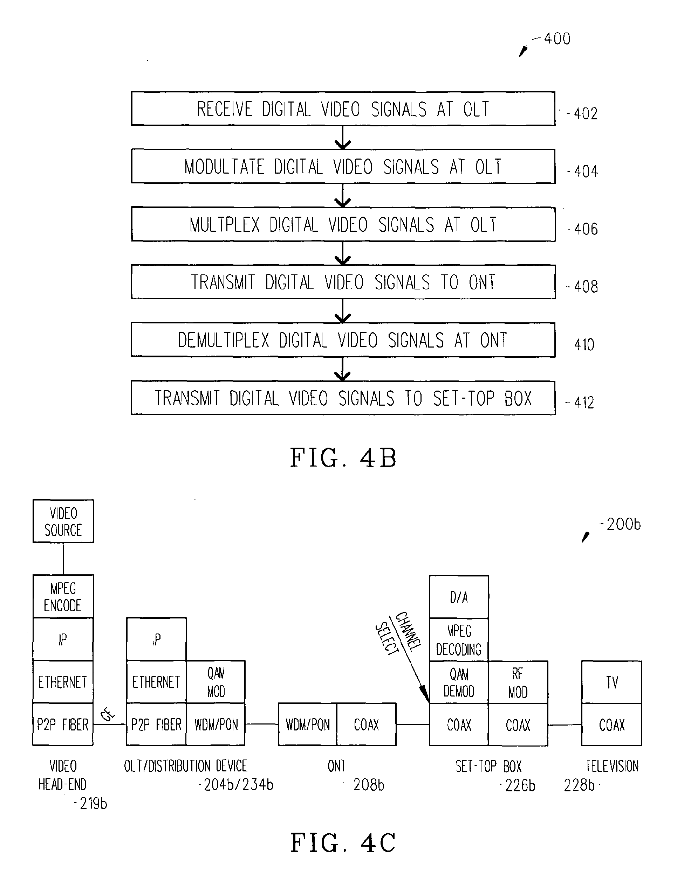

Referring to FIGURE 2, there is a block diagram that shows a PON 200 that is capable of delivering video, voice and data to an end-user 202 in accordance with the present invention. Like the traditional PON 100, the PON 200 includes an OLT 204, an ODN 206 and multiple ONTs 208 (five shown). The OLT 204 interfaces with a PSTN 210 which enables voice to be delivered to the end-user 202 via a POTS device 212 (e.g., telephone 212). The OLT 204 also interfaces with an ATM/IP network 214 which enables data and inband video to be delivered to the end-user 202 via a PC 216. Typically, the voice and data are transmitted to the end-user 202 on a 1480-1500nm band (e.g., 1490nm wavelength) and received from the end-user 202 on a 1260-1360nm band (e.g., 1310nm wavelength). However in contrast to the traditional PON 100, the PON 200 uses a WDM digital video overlay 218 to deliver a digital video signal 220 on a 1550nm wavelength (for example) from a video head-end 219 to a television 221 used by the end-user 202. To implement the WDM digital video overlay 218, the PON 200 utilizes WDM filters, a modulator (e.g., QAM modulator), a data compression protocol (e.g., MPEG2, MPEG4) and a transport protocol (e.g., Ethernet). A more detailed description about how two different embodiments of the PON 200 can utilize the WDM filters, the modulator, the data compression protocol and the transport protocol to enable the WDM digital video overlay 218 are described in detail below with respect to FIGURES 3 and 4.

Referring to FIGURES 3A-3D, there are shown three block diagrams and a flowchart associated with a first embodiment of the PON 200a in accordance with the present invention. The PON 200a includes an OLT 204a, an ODN 206a and multiple ONTs 208a (five shown). Certain details associated with the components within the OLT 204a, ODN 206a and ONT 208a are well known in the industry. Therefore, for clarity, the description provided below in relation to the PON 200a omits those well known details and components that are not necessary to understand the present invention.

As can be seen, the OLT 204a interfaces with a PSTN 210a which enables voice to be delivered to the end-user 202a via a POTS device 212a (e.g., telephone 212a). The OLT 204a also interfaces with an ATM/IP network 214a which enables data to be delivered to the end-user 202a via a PC 216a. Moreover, the OLT 204a interfaces with a video-head end 219a to deliver one or more digital video signals 220a to a set-top box 226a and display 228a (e.g., television 228a) which are used by the end-user 202a.

The video-head end 219a is the video source for the PON 200a. The video-head end 219a interfaces with a broadcast receiver 230a and an enhanced video content provider 232a. The broadcast receiver 230a is used to receive analog and digital broadcasted television signals (or high definition television signals). The analog broadcasted television signals need to be digitized. And, then the digitized analog and the digital broadcasted television signals are encoded with an appropriate video data compression encoding scheme such as MPEG2 or MPEG4 (for example). The digital signals 220a are then transported to a distribution device 234a that can be co-located with the OLT 204a. The transport protocol can be Gigabit Ethernet (for example). Whereas, the video content provider 232a can supply digital video signals 220a (including high definition television signals 220a) from services like Video On Demand (VoD) and Pay Per View (PPV). The video content provider 232a typically supplies digital video signals 220a that are already digitized and encoded in the appropriate format. However, the video-head end 219a may need to encrypt the VoD and PPV digital video signals 220a to ensure privacy and to prevent unauthorized end-users 202a from viewing the material without payment. Moreover, the video head-end 219a may need to receive information (authorization and authentication information) about the appropriate end-users 202a to determine the destinations of those end-users 202a before it can supply VoD and PPV digital video signals 220a. This information could be provided via an upstream PON data link from the ONT 208a (see FIGURE 3D).

As described above, the video-head end 219a interfaces with the distribution device 234a which is typically co-located with the OLT 204a. The distribution device 234a includes an optical transmitter 236a that transmits the digital video signals 220a to a WDM filter 238a. The optical transmitter 236a feeds the WDM filter 238a using the appropriate wavelength (e.g., 1550nm center-wavelength) to fit into the WDM scheme specified by the PON 200a. It should be appreciated that Gigabit Ethernet has been specified for several wavelengths, one of them being 1550nm. In the case of distributing specialized video content such as VoD or PPV digital video signals 220a, the distribution device 234a may need to perform port selection tasks to select the correct ports which select the correct PON trees that serve the appropriate end-users 202a. This information could be provided by the video head-end 219a.

After the WDM filter 238a receives (step 302 in FIGURE 3B) the digital video signals 220a (e.g. MPEG2 encoded PPV digital video signals 220a) from the video-head end 219a and the distribution device 234a. Then the WDM filter 238a multiplexes (step 304) the digital video signals 220a and outputs (step 306) a multiplexed digital video signal 220a on an optical fiber 239a to the ONT 208a. The ONT 208a and in particular a WDM filter 240a receives and demultiplexes (step 308) the multiplexed digital video signal 220a from the data signal and voice signal. The WDM filter 240a then outputs demultiplexed digital video signals 220a to a modulator 242a (e.g., QAM modulator 242a) shown located in the ONT 208a. The modulator 242a receives and modulates (step 310) the demultiplexed digital video signals 220a and then outputs (step 312) the modulated digital video signals 220a over a co-axial cable 243 (for example) to the set-top box 226a.

The set-top box 226a includes a tuner 244a that downconverts to baseband a selected carrier of one of the modulated digital video signals 220a based on a channel selected by the end-user 202a. The set-top box 226a also includes a demodulator 246a (e.g., QAM demodulator 246a) that translates the baseband video signal 220a back into a digital video signal 220a. This digital video signal 220a is then decoded with a decoder 248a (e.g., MPEG decoder 248a). The decoded video signal 220a is fed over a co-axial cable (for example) to a video port or S-video port in the television 228a. Or, the decoded digital video signal 220a can be RF modulated (NTSC or PAL) and sent to the television 228a. For a more detailed discussion about one way to implement this WDM digital video overlay reference is made to the description provided below that is associated with FIGURE 3C which shows the protocol stack for the PON 200a.

Referring to FIGURE 3C, there is a diagram illustrating in greater detail exemplary protocol stacks associated with the video-head end 219a, the PON 200a, the set-top box 226a and the television 228a. It should be understood that for clarity many of the details associated with each protocol are well known to those skilled in the art and as such are not described in detail herein.

The video-head end 219a has a protocol stack which includes at least the following layers:

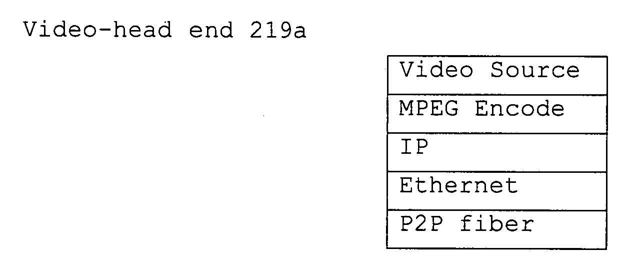

The video-head end 219a is connected to the OLT 204a which has a protocol stack with at least the following layers:

| OLT 204a | |
|---|---|
| Ethernet | Ethernet |
| P2P Fiber | WDM/PON |

This exemplary protocol stack indicates that the OLT 204a converts the physical layer from point-2-point fiber (such as Gigabit Ethernet) to WDM over PON while the layer above (such as Ethernet) remains untouched. The OLT 204a is connected to the ONT 208a which has a protocol stack with at least the following layers:

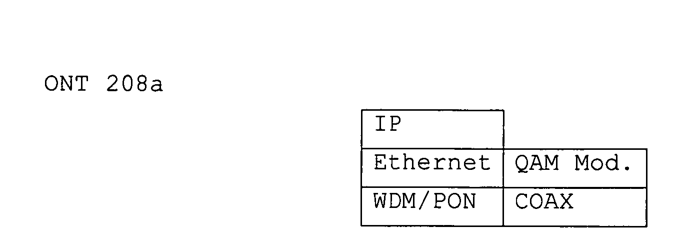

This exemplary protocol stack indicates that the transport layers (IP and Ethernet) are terminated in the ONT 208a and the video channels 220a are modulated and then transported further using COAX. The ONT 208a is connected to the set-top box 226a which has a protocol stack with at least the following layers:

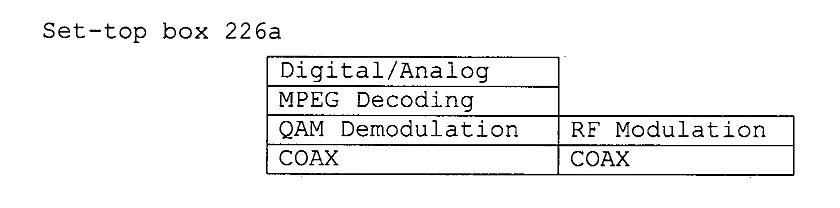

It should be appreciated that the set-top box 226a can be a legacy set-top box 226a such as "commodity" satellite receiver set-top box which has a large bandwidth capability. If a legacy set-top box 226a is used then the modulator 242a would need to be selected to interface with the set-top box 226a. The set-top box 226a is connected to the television 228a which has a protocol stack with at least the following layers:

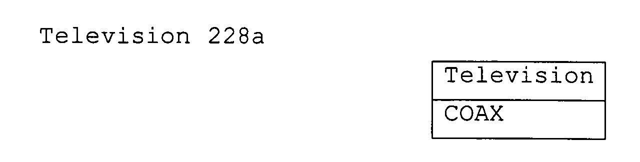

As shown in FIGURE 3C, it can be seen that the connection between the video-head end 219a and the ONT 208a is basically Ethernet (with on top of that maybe IP). This architecture has some advantages such as:
- Maximum reuse of commodity Ethernet technology including the optics feeding into the WDM filter 238a.
- Flexible topology allows for multiple video sources to interface with the PON 200a. This architecture is very suitable for the model where both broadcast video and specialized video (such as PPV, VoD) can be delivered to the end-user 202a.

A drawback of the architecture shown in FIGURE 3C is that each ONT 208a needs to have a modulator 242a (e.g., QAM video modulator 242a) designed to interface with the set-top box 226a (e.g., "commodity" set-top box 226a). And, if a QAM video modulator 242a is used then it needs to model somewhere between 40 to 150 carriers which involves a lot of digital signal processing. A possible solution to the drawback associated with the QAM modulator 242a would be to only modulate the digital video signals 220a (channels) that the set-top box 226a has selected to demodulate but this would require a management channel between the set-top box 226a and ONT 208a.

Referring now to FIGURE 3D, there is shown a block diagram that illustrates in greater detail the basic components of the ONT 208a. Certain details associated with the components like the E/O receiver 250a, the PON-PHY (such as BPON, EPON or GPON) 252a, the PON TC 254a, the Ethernet component 256a and the CODEC & SLICS 258a within the ONT 208a are known in the industry Therefore, for clarity, the description provided below in relation to the ONT 208a omits details about those components and other components not necessary to understand the present invention. As can be seen, the ONT 208a in addition to components 250a, 252a, 254a, 256a and 258a includes the WDM filter 240a which is used to separate the voice/data upstream and downstream from the digital video signal overlay downstream. The ONT 208a also includes a digital video receiver 260a that receives the digital video signal 220a on the 1550nm wavelength (for example) and synchronizes the datastream of the received digital video signal 220a using basic framing applied on a physical layer. Once synchronization is established, the digital video receiver 260a filters the digital video signal 220a that is then sent to the modulator 242a which manipulates the video signal 220a so that is interoperable with the set-top box 226a. In the situation where the digital video signals 220a are VoD or PPV digital video signals 220a, then the digital video receiver 260a may need to receive information from the inband PON data stream (e.g., Ethernet device 256a) so that it can de-encrypt the VoD or PPV digital video signal 220a. Alternatively, the set-top box 226a can decode the encrypted VoD and PPV video signals 220a.

As described above, the modulator 242a can be a QAM modulator 242a which is able to modulate the digital video signals 220a into the available frequency spectrum so they can be transported to the set-top box 226a. It is well known that the capacity of a single QAM modulated signal depends on constellation size and symbol-rate. And, that a higher constellation size is more spectral efficient and as such allows more data capacity. However a higher constellation size also requires a larger signal-to-noise (SNR) ratio to maintain the desired SNR ratio. In view of these facts and since the set-top box 226a is typically located relatively close to the television 228a this allows the use a very large bandwidth such as 2GHz (for example). Consequently, the QAM symbol rate can be very large (e.g., up to 45Msps) which allows for very small constellation sizes. BPSK and QPSK are other modulation schemes that could be used this environment. And, in the application where a coax-cable or terrestrial distribution network is used to connect the set-top box 226a to the television 228a then the available bandwidth would be more restrictive. In this case, the QAM modulated carriers are restricted to 6, 7 or 8 MHz in order to remain compatible with the analog RF modulated NTSC, PAL or SECAM video channels. In these environments 64-QAM or 256 QAM are the typical modulation schemes that can be used to achieve a higher spectral efficiency. Again, the choice of modulation schemes such as QAM, BPSK or QPSK used by the modulator 242a can be dictated by the type of set-top box 226a selected to be used in the present invention.

Referring to FIGURES 4A-4C, there are shown two block diagrams and a flowchart associated with a second embodiment of the PON 200b in accordance with the present invention. The PON 200b includes an OLT 204b, an ODN 206b and multiple ONTs 208b (five shown). Again, certain details associated with the components within the OLT 204b, ODN 206b and ONT 208b are well known in the industry. Therefore, for clarity, the description provided below in relation to the PON 200b omits those well known details and components that are not necessary to understand the present invention.

As can be seen, the OLT 204b interfaces with a PSTN 210b which enables voice to be delivered to the end-user 202b via a POTS device 212b (e.g., telephone 212b). The OLT 204b also interfaces with an ATM/IP network 214b which enables data to be delivered to the end-user 202b via a PC 216b. Moreover, the OLT 204b interfaces with a video-head end 219b (similar to video-head end 219a) to deliver one or more digital video signals 220b to the end-user 202b via a set-top box 226b (similar to set-top box 226a) and a display 228b (e.g., television 228b). To accomplish this, the OLT 204b and in particular a co-located modulator 242b (e.g., QAM modulator 242b shown within the distribution device 234b) receives (step 402 in FIGURE 4B) the digital video signals 220b (e.g. MPEG2 encoded PPV digital video signals 220b) from the video-head end 219b and the distribution device 234b. Then the modulator 242b modulates (step 404) the digital video signals 220b and outputs modulated digital video signals 220b to the WDM filter 238b. The WDM filter 238b multiplexes (step 406) the modulated digital video signals 220b and outputs (step 408) a multiplexed modulated digital video signal 220b on an optical fiber 239b to the ONT 208b. The ONT 208b and in particular a WDM filter 240b receives and demultiplexes (step 410) the multiplexed modulated digital video signal 220a from the data signal and voice signal. The WDM filter 240a then outputs (step 412) the demultiplexed modulated digital video signals 220b over a co-axial cable (for example) to the set-top box 226b.

The set-top box 226b includes a tuner 244b that downconverts to baseband a selected carrier of one of the modulated digital video signals 220b based on a channel selected by the end-user 202b. The set-top box 226b also includes a demodulator 246b (e.g., QAM demodulator 246b) that translates the baseband video signal 220b back into a digital video signal 220b. This digital video signal 220b is then decoded with a decoder 248b (e.g., MPEG decoder 248b). The decoded video signal 220b is fed over a co-axial cable (for example) to a video port or S-video port in the television 228b. Or, the decoded digital video signal 220b can be RF modulated (NTSC or PAL) and sent to the television 228b. For a more detailed discussion about one way to implement this WDM digital video overlay reference is made to the description provided below that is associated with FIGURE 4C which shows the protocol stack for the PON 200b.

Referring to FIGURE 4C, there is a diagram illustrating in greater detail exemplary protocol stacks associated with the video-head end 219b, the PON 200b, the set-top box 226b and the television 228b. It should be understood that for clarity many of the details associated with each protocol are well known to those skilled in the art and as such are not described in detail herein.

The video-head end 219b is associated with a protocol stack which includes at least the following layers:

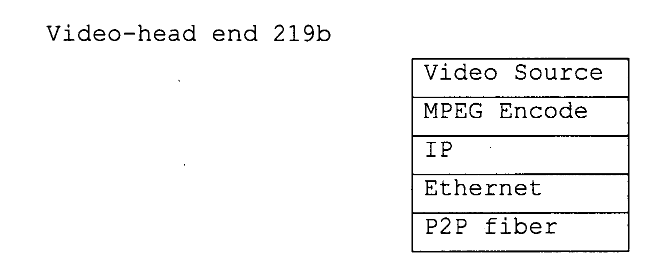

The video-head end 219b is connected to the OLT 204b which has a protocol stack with at least the following layers:

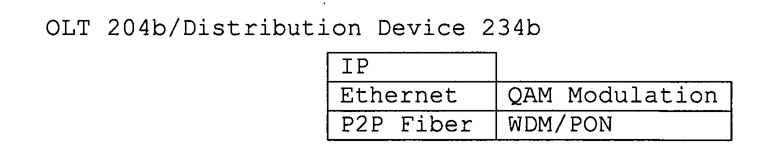

The OLT 204b/distribution device 234b is connected to the ONT 208b which has a protocol stack with at least the following layers:

| ONT 208b | |
|---|---|
| WDM/PON | COAX |

The ONT 208b is connected to the set-top box 226b which has a protocol stack with at least the following layers:

| Set-top box 226b | |
|---|---|
| Digital/Analog | |
| MPEG Decoding | |
| QAM Demodulation | RF Modulation |
| COAX | COAX |

Again, it should be appreciated that the set-top box 226b can be a legacy set-top box 226b such as "commodity" satellite receiver set-top box which has a large bandwidth capability. The set-top box 226b is connected to the television 228b which has a protocol stack with at least the following layers:

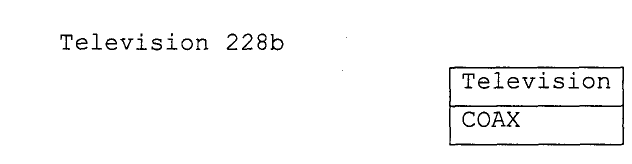

As shown in FIGURE 4C, it can be seen that the QAM complexity is reduced in PON 200b because one QAM modulator 242b is used by the OLT 204b as compared to the first embodiment of the PON 200a which has a QAM modulator 242a in each one of the ONTs 208a (see FIGURE 4A). One possible drawback of associating the QAM modulator 242b with the OLT 204b is that the linearity and SNR requirements are increased on the optical transmitter 236b that feeds the digital video signals 220b into the WDM filter 238b. Nevertheless these requirements are still quite relaxed as compared to the traditional PON 100 that uses the WDM analog video overlay 122 (see FIGURE 1). It should also be appreciated that the PON 200b could use ONTs 208b that are similar to the ONTs used in the traditional PON 100 that uses the WDM analog video overlay 122 so long as the utilized spectrum by the centralized QAM modulator 242b associated with the OLT 204b corresponds to the band in the analog path which can be up to 550-750MHz for NTSC.

It should be appreciated that protocols used to describe the two PONs 200a and 200b above are exemplary and that there are many different types of protocols that could be used to implement the PONs 200a and 200b.

Referring to both embodiments of the PON 200, it can be seen that the WDM digital video overlay can reuse mature technologies such as MPEG2 and MPEG4 for data-compression and Ethernet as a transport protocol. By reusing these technologies, the WDM digital video overlay can be implemented with minimal changes to the basic PON. In addition, since MPEG2 is already used to compress digital video signals for satellite broadcast this means that the set-top box 226 can be the same as or similar to a traditional satellite set-top box. Moreover, since Gigabit Ethernet which has a payload of 1Gbps is already used to connect Local Area Networks (LANs) and IP switches this means that the distribution of digital video signals 220 could be implemented by reusing off-the shelf Gigabit Ethernet switches. If Gigabit Ethernet is used it can deliver up to 250 TV channels or 50 HDTV channels or any linear combination of these two simply by allocating 4Mbps for a normal TV channel and 20Mbps for a HDTV channel.
And, as the data compression technology evolves it is believed that the next generation Ethernet standard will be able to deliver 10Gbps which enables the amount of channels that can be delivered via this infrastructure to grow dramatically over the next few years.

In addition, if the PON 200 utilizes an Ethernet based WDM digital signal overlay then the PON 200 can reuse some parts of the IEEE EFM EPON specification. For example, the EPON specification requires that every ONT receives the full digital signal content. And, if the PON 200 reuses the ONT that is based on the EPON specification then the specialized content like VoD and PPV digital video signals 220 destined for specific users 202 would have to be filtered in the ONT 208. However, this is not believed to be a security risk since the same digital signal broadcast concept with content filtering in the ONT is also applied for the data path in both the EPON and APON specifications.

Lastly, it should be noted that since the PON 200 has a downstream digital video broadcast then there is no need for a point-2-multipoint TDMA based MAC layer, no management to guarantee fair upstream bandwidth allocation, not even an ONT ranging protocol. In other words, the architecture of the PON 200 can be characterized as a "dumb", always on downstream video channel or as a big "dumb" bitpipe if you will, with basic framing on the Physical layer to enable each ONT 208 to 'lock in' without requiring direct feedback to the digital OLT 204. This "dumb" bitpipe can be considered as a satellite replacement delivery vehicle.

Following is a list of some of the other features and advantages associated with the present invention:
- The PON that utilizes the WDM digital video overlay can be used with any standard and is not restricted to any particular standard or specification such as the EPON (specified by IEEE), the APON and the GPON (per ITU-T recommendations).
- The PON using the WDM digital video overlay can effectively lower the required bandwidth in the PON-OLT Telecom Equipment while still delivering digital broadcast video.
- The television can be any 'off the shelf' device that translates the video signal provided by the set-top box into video and audio that can be viewed and heard by the end-user.
- The set-top box can be a satellite receiver which can handle a relatively large bandwidth (2000MHz) and use BPSK or QPSK modulation. As such, the satellite receiver set-top boxes may be a better match for a PON platform that has virtually 'unlimited' bandwidth potential. One exemplary satellite receiver set-top box that is commercially available is the Conextant CX24110 which has a QPSK/BPSK demodulator IC with internal dual analog-to-digital converters, digital demodulation, and forward-error correction (FEC). The demodulator IC provides digital derotation, digital filtering, equalization, and Viterbi/Reed-Solomon FEC.
   This satellite receiver set-top box is also compliant with the DVB (ETS 300-421) specification for satellite transmission.
- The PON that delivers video signals using a digital video overlay via WDM can use the same 1550nm wavelength as would be used if the PON implemented an analog video overlay via WDM.
- This architecture provides a quick and economical roadmap to broadcast video delivery over the PON network while at the same time allowing more enhanced video services such as HDTV and Video-On-Demand.

The following features and/or combinations of features may also constitute further advantageous embodiments of the described and/or claimed invention:
- A passive optical network capable of transmitting voice and data on a 1480-1500nm band to an end-user and also capable of receiving voice and data on a 1260-1360nm band from the end-user and further capable of using a wavelength division multiplexing (WDM) digital video overlay to deliver a digital video signal on a 1550nm wavelength from a video head-end to the end-user;
- The described and/or claimed passive optical network, wherein said WDM digital video overlay utilizes a data compression scheme such as MPEG2 or MPEG4 and a transport protocol such as Ethernet to deliver the digital video signal from the video head-end to the end-user.
- The described and/or claimed passive optical network, wherein said digital video signal is generated from: an analog or digital broadcasted television signal; a video-on-demand video signal; or a high definition television signal;
- A passive optical network comprising: an optical line terminal (OLT) including a modulator capable of receiving digital video signals and further capable of outputting modulated digital video signals; said OLT further includes a wavelength division multiplexing (WDM) filter capable of receiving the modulated digital video signals and further capable of outputting a multiplexed digital video signal; and an optical network terminal (ONT) including a WDM filter capable of receiving the multiplexed modulated digital video signal and further capable of outputting demultiplexed digital video signals to a set-top box that includes: a demodulator capable of receiving at least one of the modulated digital video signals and further capable of outputting at least one demodulated digital video signal; and a decoder capable of receiving the at least one demodulated digital video signal and further capable of outputting at least one decoded digital video signal which is received by a display;
- The described and/or claimed passive optical network, wherein said digital video signals are MPEG2/MPEG4 compressed digital video signals;
- The passive optical network of Claim 12, wherein said digital video signal is generated from: an analog or digital broadcasted television signal; a video-on-demand video signal; or a high definition television signal;
- The described and/or claimed passive optical network, wherein said OLT outputs the multiplexed modulated digital video signal on a 1550nm center-wavelength to said ONT;
- The described and/or claimed passive optical network, wherein said OLT is co-located with a distribution device that incorporates the modulator;
- A method for using a WDM digital video overlay in a passive optical network to deliver video from a video head-end to an end-user, said method comprising the steps of: receiving digital video signals at an optical line terminal OLT); modulating the received digital video signals at the OLT, multiplexing the modulated digital video signals at the OLT; transmitting the multiplexed digital video signal from the OLT to an optical network terminal (ONT); receiving the multiplexed digital video signal at the ONT; demultiplexing the received modulated digital video signal at the ONT, wherein the demultiplexed digital video signals are transmitted to a set-top device wherein one of the demultiplexed digital video signals are decoded and demodulated so that the resulting video signal can be shown on a display viewed by the end-user;
- The described and/or claimed method, wherein said digital video signals are MPEG2/MPEG4 compressed digital video signals;
- The described and/or claimed method, wherein said digital video signal is generated from: an analog or digital broadcasted television signal; a video-on-demand video signal; or a high definition television signal;
- The described and/or claimed method, wherein said OLT outputs the modulated multiplexed digital video signal on a 1550nm center-wavelength to said ONT;
- The described and/or claimed method, wherein said OLT is co-located with a distribution device that incorporates the modulator;
- The described and/or claimed set-top box, wherein said passive optical network utilizes a data compression scheme such as MPEG2 or MPEG4 and a transport protocol such as Ethernet to deliver the digital video signals to said demodulator and said decoder;
- A method for a broadcaster to transmit a video signal to an end-user, said method comprising the step of forwarding a video signal to a video-head end which interfaces with a passive optical network that uses a wavelength division multiplexing (WDM) digital video overlay to transmit the video signal to a set-top box that manipulates the video signal so that the manipulated video signal can be shown on a display viewed by said end-user;
- The described and/or claimed method, wherein said video-head end utilizes a data compression scheme such as MPEG2 or MPEG4 and a transport protocol such as Ethernet to deliver the digital video signal to said passive optical network;
- The described and/or claimed method, wherein said broadcaster generates one of the following types of video signal: analog or digital broadcasted television signals; a video-on-demand video signal; or high definition television signals.

Although several embodiments of the present invention have been illustrated in the accompanying Drawings and described in the foregoing Detailed Description, it should be understood that the invention is not limited to the embodiments disclosed, but is capable of numerous rearrangements, modifications and substitutions without departing from the spirit of the invention as set forth and defined by the following claims.

## Claims

1. A passive optical network comprising:
an optical line terminal (OLT) including a wavelength division multiplexing (WDM) filter capable of receiving digital video signals and further capable of outputting a multiplexed digital video signal;
an optical network terminal (ONT) including a WDM filter capable of receiving the multiplexed digital video signal and further capable of outputting demultiplexed digital video signals; and
said ONT further includes a modulator capable of receiving the demultiplexed digital video signals and outputting modulated digital video signals to a set-top box that includes:
a demodulator capable of receiving at least one of the modulated digital video signals and further capable of outputting at least one demodulated digital video signal; and
a decoder capable of receiving the at least one demodulated digital video signal and further capable of outputting at least one decoded digital video signal which is received by a display.

2. The passive optical network of Claim 1, wherein said digital video signals are MPEG2/MPEG4 compressed digital video signals.

3. The passive optical network of Claim 1, wherein said digital video signal is generated from:
an analog or digital broadcasted television signal;
a video-on-demand video signal; or
a high definition television signal.

4. The passive optical network of Claim 1, wherein said OLT outputs the multiplexed digital video signal on a 1550nm center-wavelength to said ONT.

5. A method for using a WDM digital video overlay in a passive optical network to deliver video from a video head-end to an end-user, said method comprising the steps of:
receiving digital video signals at an optical line terminal (OLT);
multiplexing the received digital video signals at the OLT;
transmitting the multiplexed digital video signal from the OLT to an optical network terminal (ONT); receiving the multiplexed digital video signal at the ONT;
demultiplexing the received digital video signal at the ONT;
modulating the demultiplexed digital video signals at the ONT, wherein the modulated digital video signals are transmitted to a set-top device wherein one of the modulated digital video signals are decoded and demodulated so that the resulting video signal can be shown on a display viewed by the end-user.

6. The method of Claim 5, wherein said digital video signals are MPEG2/MPEG4 compressed digital video signals.

7. The method of Claim 5, wherein said digital video signal is generated from:
an analog or digital broadcasted television signal;
a video-on-demand video signal; or
a high definition television signal.

8. The method of Claim 5, wherein said OLT outputs the multiplexed digital video signal on a 1550nm center-wavelength to said ONT.

9. A set-top box comprising:
a demodulator and a decoder which are capable of receiving at least one digital video signal from a passive optical network that uses a wavelength division multiplexing (WDM) digital video overlay to transmit the at least one digital video signal to said demodulator and said decoder which are further capable of demodulating and decoding one of the at least one received digital video signals so that the decoded demodulated digital video signal can be shown on a display.

10. The set-top box of Claim 9, wherein said digital video signals are generated from:
analog or digital broadcasted television signals;
a video-on-demand video signal; or
high definition television signals.
